# EUROPEAN PATENT SPECIFICATION

(11) **EP 1 612 892 B1**
(45) Date of publication and mention of the grant of the patent: **19.03.2008**
(21) Application number: 05105732.1
(22) Date of filing: 28.06.2005
(51) Int. Cl.: H01R 13/14

(54) **Connector for electronic components**
Verbinder für elektronische Bauteile
Connecteur pour composants électroniques

(30) Priority: 30.06.2004 EP 04103094
(43) Date of publication of application: 04.01.2006
(73) Proprietor: Tyco Electronics Nederland B.V., 5201 AG's-Hertogenbosch (NL)
(72) Inventor: Tuin, Jacobus Nicolaas, 5684 HC, Best (NL); Jaeger, Peter Dirk, 4271 BP, Dussen (NL)
(74) Representative: Johnstone, Douglas Ian

(56) References cited:
- EP-A- 1 202 401
- DE-A1- 19 600 189
- US-A- 1 880 511
- US-A- 2 870 424
- US-A- 3 233 208
- US-A- 5 951 314

## Description

The invention relates to electrical connectors and in particular to a receptacle connector and a connector assembly for an electronic component, which can be used in mobile electronic devices such as mobile phones.

Detachable electrical connectors are used to temporarily connect electronic components or accessories with electronic devices. Besides providing a low-resistance electrical connection, the electrical connectors must be mechanically stable to ensure a permanent electrical connection. The demands on the reliability of electrical connections are of particular importance if the electronic devices are used under conditions where mechanical stress or load occurs. For such electronic devices rugged electrical connectors are required.

A typical example of an electronic device, which may experience mechanical stress, is a mobile phone. Although specific accessories such as carrying cases are available for mobile phones to reduce the risk of mechanical stress, many mobile phone users are careless when using their phones. Further, it may happen that a mobile phone is accidentally dropped on the floor. The high mechanical stress of such an impact can lead to a severe damage of the mobile phone.

A removable battery pack of a mobile phone is, for instance, such an electronic component, which is detachably connected with the mobile phone as disclosed in US Patent No. 6,171,138 B1. This battery pack comprises an electrical connector assembly having a latch and a U-shaped contact housing for accommodating a plurality of stacked electrical contacts. The latch, which is partially surrounded by the contact housing, engages with a housing of the mobile phone to fasten a battery cover. Each of the stacked electrical contacts comprises a non-compliant portion, which is fixed to the contact housing, and a compliant portion having a contact portion for contacting corresponding receptacle contacts of a receptacle connector fixed to the mobile phone. At the non-compliant portion, contact attachment tabs are provided which are inserted into corresponding contact alignment slots of the contact housing. For further alignment, alignment slots are provided in the walls of the contact housing, through which the compliant portions of the electrical contacts extend so that the contact portions of the electrical contacts are exposed on an outside of the contact housing. When the battery cover is attached to the mobile phone, the contact portions are resiliently pressed against the receptacle contacts by the compliant portions of the stacked electrical contacts.

Another example of an electrical connector assembly for a battery pack of a mobile phone is disclosed in US Patent Application Publication No. 2004/0002265 A1. The assembly comprises a base connector fixedly soldered onto a mounting surface and a socket connector for inserting into an inserting space of the base connector along a mating direction, which is perpendicular with respect to the mounting surface. Three plate-like contacts extending parallel to each other are arranged in the inserting space and are contacted by contacts of the socket connector, each of which includes a pair of contact pieces extending parallel with each other. Each of the contact pieces is provided with a contact portion, the contact portions projecting toward each other for engaging with the side walls of the plate-like contacts of the base connector. The socket connector is further connected to a conductor, which generally extends parallel to the mounting surface of the base connector when the socket connector is inserted. The socket connector and the base connector further comprise cam surfaces angled with respect to the mounting surface of the base connector to convert tensions exerted on the socket connector into a perpendicularly orientated force. As a consequence, when pulling on the leads, the engaging cam surfaces redirect the acting forces into extracting forces perpendicular to the mounting surface to unplug the socket connector. Thereby, shear stresses within the solder joints between the base connector and the mounting surface are partially reduced.

Mechanical strains of an electrical connection can also occur within stationary electronic devices, and efforts have been made to compensate the strains and to improve the reliability of the electrical connection. Stress compensation is of particular importance when the electrical contacts of the connectors are directly soldered to a printed circuit board (PCB). A contact element with improved stress-compensation is, for instance, disclosed in US Patent No. 4,998,890. This contact element is used as an electrical connector for connecting a daughter PCB to a mother PCB. When soldered to a PCB, the contact element extends perpendicular to a main surface of the PCB. The contact element comprises a base portion and first and second spring contact portions, which are supported by resilient supporting arm members integrally attached to the base portion and the spring contact portions. The first and second spring contact portions contact each other on a boundary separating line along which the spring contacts portions can slide with respect to each other to prevent overstress when the daughter PCB is inserted into the contact element.

A further prior art receptacle connector is described in US Patent No. 5, 951, 341. The connector includes a cylindrical contact member which is accommodated in a housing and connected to a wire engaging portion of the connector by means of a pair of zig-zag form conductors. Due to the zig-zag form of the conductors, lateral displacement of the contact member in the housing to accommodate variations in positional alignment of a plug contact engaging the contact member is provided. the issue of stress-compensation or stress-reduction, a need still exists for improved connectors. It is therefore an object of the invention to provide an electrical connector having an improved stress-compensation, which can be easily manufactured and fixed to an electronic component.

This and other objects of the invention which will become apparent from the following description of the invention and are solved by a receptacle connector according to claim 1.

The receptacle connector for an electronic component comprises at least one receptacle contact, the receptacle contact comprises at least one contact member for receiving a plug contact of a mating plug connector, the plug contact can be inserted into the contact member along a mating direction; and at least two spring members for enabling a resilient displacement of the contact member in a direction substantially lateral with respect to the mating direction.

The contact member establishes the actual electrical connection while the spring member of the receptacle contact enables the contact member to follow a displacement of the plug contact so that the contact member remains in permanent contact with the plug contact. Further, the spring member mechanically decouples the contact member from the electronic component to a great extent and hence reduces mechanical stress when the contact member is displaced due to external forces. Hence, a permanent electrical connection is ensured regardless of displacement of the contact member.

In a preferred embodiment of the invention, the receptacle contact further comprises at least one base member for fastening the receptacle contact to the component. The base member may comprise a soldering surface for soldering the receptacle contact to the electronic component to provide a mechanical and/or electrical connection. Alternative electrical and/or mechanical connections such as connections by wires or solder legs are also possible.

Preferably, the spring member enables displacement of the whole contact member with respect to the base member which means that a physical connection between the contact member and the base member is preferably provided only by the spring member. The spring member decouples the contact member from the base member to prevent or reduce a transmission of stress from the contact member to the base member.

Typically, a spring is designed to have a direction of main elasticity. For instance, the main direction of elasticity of a helical spring is coaxial with its axial extension. On the other hand, a flat spring is most resilient perpendicular to its extension. When talking about lateral displacement of the contact member enabled by the spring member, it is meant that the spring member preferably has its main direction of elasticity in the lateral direction. However, it will be evident to those skilled in the art that the spring member can also be partially or fully resilient in a direction different from the direction of main elasticity and therefore may enable a certain resilient displacement in further directions.

The receptacle contact is preferably fixed to the electronic component at its base member and in particular at its contact or soldering surface. Typically, the electronic component has a main surface such as, for example, the surface of a PCB. The contact surface of the base member extends, for example, parallel to this main surface and is preferably fastened by soldering to a soldering pad arranged on that main surface. The mating direction lies in a mating plane that preferably extends substantially perpendicular to the contact surface and hence to the main surface of the electronic component.

The contact member can be formed so that the plug contact of the mating plug connector can be inserted only along a given mating direction of the mating plane.
However, in a preferred embodiment, the contact member enables the plug contact to be inserted along a plurality of mating directions extending in the mating plane. The plurality of mating directions comprises all directions within a sector of a circle defined by a first and a second direction. If, for instance, a Cartesian co-ordinate system XYZ is defined, and the mating plane extends in the YZ-plane, the first and second direction can be, for instance, the -Y and -Z directions, respectively. In this case, the plug contact can be inserted along any direction, which is a linear combination of the -Y and -Z directions.

A U-shaped contact member enables, for example, the insertion of the plug contact along a plurality of mating directions, and the legs of such a contact member are disposed substantially parallel with respect to the mating plane. Preferably, the contact member is a U-shaped metal strip. The plug contact of a mating plug can thus be inserted parallel or perpendicular to the extension of the contact member as well as along any combination of these two directions, which facilitates the insertion of the mating plug contact. Both a parallel and a perpendicular arrangement of a U-shaped contact member with respect to the contact surface of the base member provide such a plurality of mating directions.

The contact member comprises at least two opposing contact points, between which the plug contact of the mating plug connector is accommodated and which directly contact the plug contact when it is inserted. Preferably, the contact points are arranged in the lateral direction. The contact points can be of different size and shape to meet specific needs and may be formed by points or faces. A U-shaped contact member extending parallel to the mating plane is an example of such a contact member. If the plug connector and the receptacle connector are displaced with respect to each other in a lateral direction, the laterally arranged contact points of the contact member remain in permanent contact with the plug contact while the contact member as a whole is resiliently displaced. To ensure a firm engagement between the contact points and the plug contact the contact member comprises spring elements for clamping the plug contact, for instance, by pressing the contact points against the plug contact when it is inserted. Preferably, the spring elements have a spring constant that is higher than the spring constant of the spring member to ensure that even upon exertion of large lateral forces the contact members and the plug contact remain in close contact with each other. The spring elements provide the required contact force to keep the contact points pressed against the contact plug. A resilient first leg and a resilient second leg, each leg having a fixed end and a contact end comprising one of the contact points, form the spring elements. Returning to the U-shaped contact member, the contact ends are the free ends of the legs of the U while a connecting portion of the U connects the fixed ends. Preferably, the contact member with its two legs is integrally formed.

To further facilitate the insertion of the plug contact, the contact member may comprise guiding means for aligning the plug contact upon insertion. The guiding means can be angled with respect to the mating direction or plane. Preferably, the guiding means can be brim-like in form and partially surround each receptacle contact.

The receptacle contact comprises at least two spring members, each of them is attached to one of the two legs of the contact member. The spring members can be strip- or beam-like and integrally formed with the contact member. Suitable configurations comprise an attachment of the strip members at the contact end of the legs or at a portion between the contact and the fixed ends. Other configurations are possible as well. Preferably, the spring members have a folded structure like a double-folded metal strip. Further, the spring members, or portions of them, can be strip-like in shape or have an arcuate or meandering form. A folded structure as well as the meander shape aims to keep the receptacle small in size while ensuring sufficient resilience of the spring members. Preferably, all parts of the receptacle contact are integrally formed so that an electrical connection between the contact member and the contact surface is provided through the spring member. The receptacle contact is preferably a folded metal strip or beam.

The receptacle connector is preferably used to connect an electronic component to a mobile electronic device, which may experience mechanical shocks or vibrations. Such electronic mobile devices comprise mobile phones and personal digital assistants (PDA). The receptacle connector is particularly suitable for connecting a battery pack to a mobile device, such as a mobile phone.

In a further embodiment of the invention, the receptacle connector comprises a housing having at least one elongated opening aligned with the contact member to enable the plug contact of the mating plug connector to be inserted into the contact member.

A connector assembly comprising a receptacle connector, as described above, and a plug connector further solve the object of the invention. Although the receptacle connector is preferably mounted to a removable electronic component such as a battery pack, and the plug connector is connected to a mobile device, such as a mobile phone, the opposite configuration is also possible. In an aspect of the invention, the plug connector comprises at least one plug contact for inserting into the at least one contact member of the receptacle contact, the plug contact having two substantially parallel contact surfaces, each of which engages with one of the contact points of the receptacle contact when the plug contact is inserted into the contact member. For such a plug contact of plate-like form, a U-shaped contact member is preferred.

Preferably, the plug contact is fixed to a plug housing on a first narrow side or edge that runs substantially perpendicular to the contact surfaces. A second narrow side or edge of the plug contacts, which runs substantially perpendicular to the contact surfaces and perpendicular to the first narrow side, forms a soldering surface for soldering to an electronic component such as a PCB.

Having described some of the main features of the invention, a more detailed description of the invention, from which further features will come apparent, is set forth in the remainder of the specification in conjunction with the accompanying drawings in which:
Figures 1 to 4 are different perspective views of a first embodiment of a receptacle contact;
Figure 5 is a receptacle connector comprising three receptacle contacts;
Figure 6 shows the receptacle connector of Figure 5 but covered with a housing;
Figures 7 to 9 are different perspective views of a second embodiment of a receptacle contact;
Figure 10 is a plug connector;
Figure 11 is a receptacle connector comprising three receptacle contacts;
Figure 12 shows the receptacle connector of Figure 11 but covered with a housing;
Figure 13 is a connector assembly comprising a receptacle connector and a plug connector both soldered to respective PCBs;
Figure 14 shows the connector assembly of Figure 13 in a mating configuration;
Figure 15 is a perspective view of a portion of a battery pack connected with a mobile phone;
Figure 16 is a side view of a battery pack connected with a PCB by a connector assembly;
Figure 17 shows an assembly step for soldering a receptacle connector and a plug connector to the respective PCBs; and
Figure 18 is a temperature profile of a soldering process for soldering a receptacle connector and a plug connector to respective PCBs.

Reference will now be made in detail to the presently preferred embodiments of the invention, examples of which are illustrated in the drawings. Each example is provided by way of explanation of the invention and is not meant as a limitation of the invention. For example, features illustrated or described as part of one embodiment can be used on or in conjunction with other embodiments to yield yet a further embodiment. It is intended that the present invention include such modifications and variations.

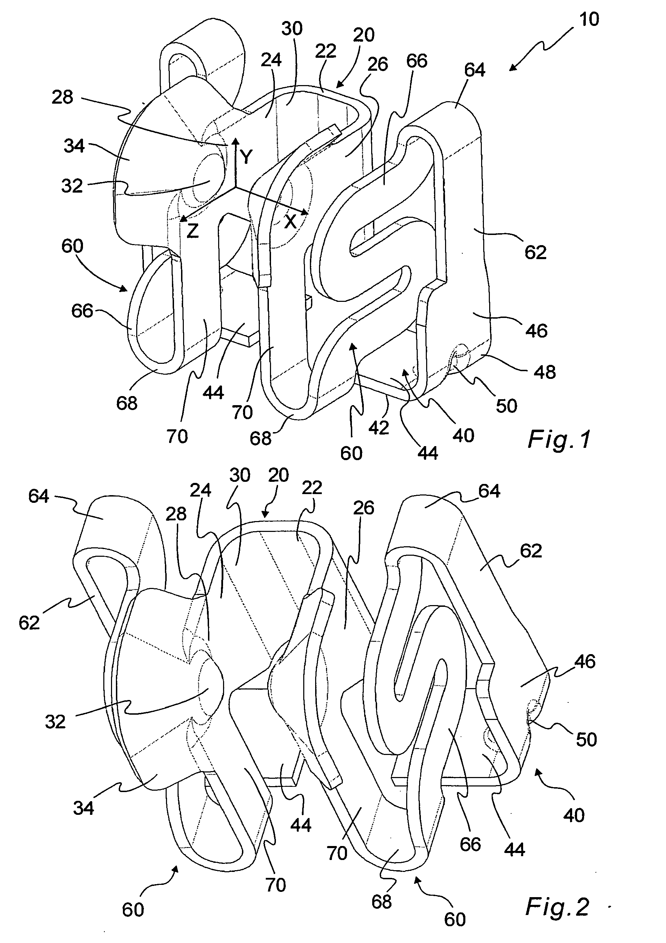

A Cartesian co-ordinate system, which is used throughout the descriptions to indicate the spatial relationships of structural features of the present invention, is shown in Figures 1, 7 and 14, respectively. According to this, a mating plane extends in the YZ-plane, a lateral direction is coaxial with the X-axis and a contact surface of a base portion and a main surface of an electronic component is in the XZ-plane, as described in more detail below. Further, a front side of the receptacle connector typically refers to the side that is facing a mating plug connector.

With reference to Figures 1 to 4, a first embodiment of a receptacle contact 10 comprising a contact member 20, a base member 40 and two spring members 60 is described. The receptacle contact 10 is integrally formed by punching a shaped metal strip out of a metal plate and subsequently bending that metal strip. Preferably, the receptacle contact 10 is mirror-symmetrically formed with respect to the mating plane YZ, which extends perpendicular to a contact surface 42 of the base member 40.

The base member 40 comprises a bottom portion 44 and a lateral portion 46, which is upwardly bent along a bending edge 48 and arranged on a lateral outer side of the receptacle contact 10. An inwardly directed central depression 50 that is provided on the bending edge 48 between the bottom portion 44 and the lateral portion 46 reinforces the base member 40. On its upper end, the lateral portion 46 passes into the spring member 60 that comprises a first portion 62, which upwardly extends up to an upper bending edge 64, a second portion 66, which is downwardly bent on the upper bending edge 64 and extends up to a lower bending edge 68, and a third portion 70, which is upwardly bent on the lower bending edge 68. The first and third portions 62 and 70 are straight strips while the second portion 66 is a meander-shaped strip. Each portion has the same thickness. However, it will be evident to those skilled in the art that the spring member 60, the base member 40 and/or the contact member 20 may be formed with different thicknesses or can be reinforced with additional material.

Each of the first, second, and third portions 62, 66 and 70 of the spring member 60 extends in a different plane, each of which is arranged substantially parallel to the mating plane YZ. However, a slanted configuration is also possible. The first portion 62 is arranged in an outer plane, the second portion 66 in a middle plane and the third portion 70 in an inner plane. Further, the lateral portion 46 of the base member 40 is also arranged in the outer plane while a resilient leg of the contact member 20 extends in the inner plane, as described in more detail below. On the upper and lower bending edges 64 and 68, the spring member 60 passes from the outer plane to a middle plane and from the middle plane to the inner plane, respectively.

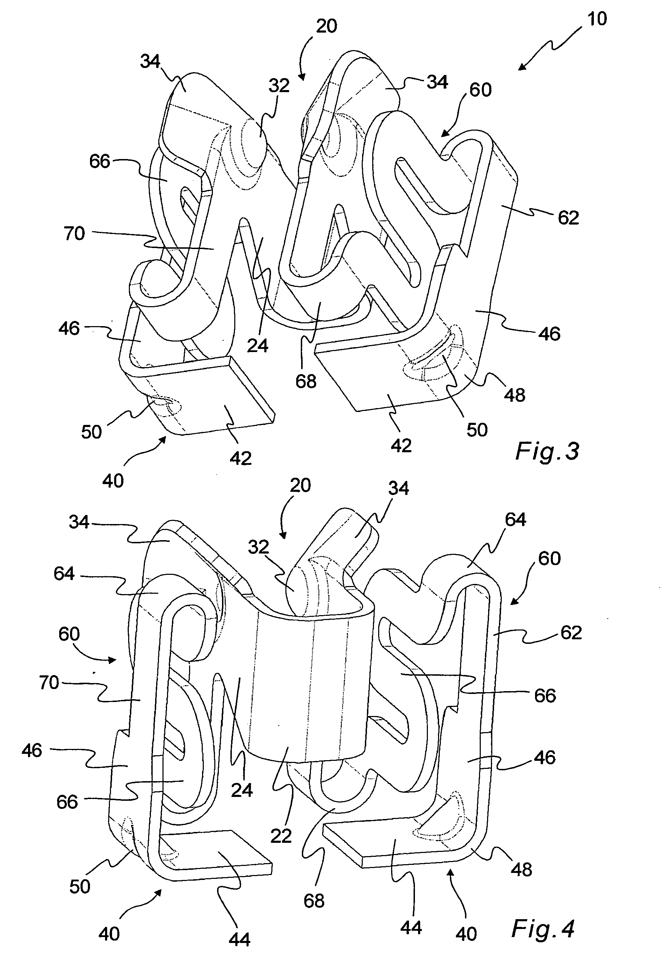

The spring member 60 passes on the upper end of the third portion 70 into the contact member 20, which is a substantially U-shaped metal strip that extends parallel to the contact surface 42 and has an opening toward a front face of the receptacle connector. A connecting portion 22 connecting first and second legs 24 and 26 of the contact member 20 is attached to fixed ends 30 of the first and second legs 24, 26 on a backside of the receptacle contact. The breadth of the metal strip forming the contact member 20, i.e. the longer sides of its rectangular cross-sectional profile, continuously increases from free or contact ends 28 of the first and second legs 24, 26 towards the fixed ends 30 and has maximum dimensions along the extension of the connecting portion 22,, for instance, , as shown in Figure 4.

At the free ends 28, the first and second legs 24, 26 comprise inwardly directed contact points 32 facing each other. The contact points 32 are arranged in the lateral direction X perpendicular to the mating plane YZ so that an inserted plug contact of the mating plug connector is contacted on opposite sides. In this embodiment, the contact points 32 are inwardly formed conical protuberances.

To facilitate the insertion and alignment of the plug contact, guiding means 34 are formed at each free ends 28 of the first and second legs 24, 26. The guiding means 34 extends along an imaginary line, which runs in a curved extension of the front edge of the third portion 70 of the spring member 60 and the upper edge of the first and second legs 24, 26, and are bent off the mating plane YZ. The brim-like or partial conical shape of the inner surfaces of the guiding means 34 constitute guiding surfaces along which the plug contact slides when it is being inserted.

Since the receptacle contact of this embodiment is mirror-symmetrical with respect to the mating plane YZ extending in the middle between the first and second legs 24, 26 of contact member 20, the receptacle contact comprises two of the base portions 40 and two of the spring members 60. Each of the spring members 60 is integrally formed with one of the base portions 40 and contacts one of the first and second legs 24, 26 of the contact member 20. This configuration is easily manufactured and assembled to an electronic component such as a PCB.

As further shown in Figures 1 to 4, the contact member 20 is arranged parallel to the contact surface 42 and extends along the Z-axis. Due to its U-shaped configuration, the plug contact can be inserted along the Z-axis, i.e. parallel to the contact member 20, as well as along the Y-axis, i.e. perpendicular to the contact member 20, or under any angle lying in the YZ quadrant. Moreover, it is possible to insert or swivel the plug contact in along a curved line. This is of particular importance for electronic components, which are to be connected with compact mobile devices that only provide a little space for a linear insertion.

The plug contact can be moved in the YZ-plane until it hits the connecting portion 22 of the contact member 20 or a main surface (not shown in Figures 1 to 4) of the electronic component. If a final insertion position, the plug contact is spaced apart from both the connecting portion 22 and the main surface. A displacement of the contact plug only affects the receptacle contact a little since the contact plug is able to freely move relative to the contact member 20 in the YZ-plane. The frictional forces between the plug contact and the contact member 20, which originate from the engagement of the contact points 32 with the plug contacts, are typically not strong enough to inhibit such a displacement. In addition to that, the spring members 60, which show certain flexibility in the Y- and Z-directions, as described later, also partially compensate such a displacement. On the other hand, a displacement in the X-direction is fully compensated by the spring members 60 while maintaining a permanent contact between the plug contact and contact member 20.

Due to their structure and cross-sectional profile, the spring members 60 have a main direction of elasticity in the X-direction. The rectangular cross-sectional profile of the spring members 60, the longer side of which extends in the YZ-plane and therefore perpendicular to the X-direction, and the S- or meander-shaped second portion 66 substantially define the elasticity. In particular, the meandering run of the second portions 66 significantly extends the overall length of the spring member 60 and hence its elasticity while enabling the spring members 60 to be compactly formed. On the other hand, the spring members 60 show a certain but substantially lower elasticity in the Z- and Y-direction than in the X-direction.

Referring to the contact member 20, the first and second legs 24, 26 constitute spring elements, which have a direction of main elasticity coaxial with the X-axis and hence the direction of the main elasticity of the spring members 60, while virtually no elasticity is provided in the Y- and Z-direction. The continuous increase of the cross-sectional profile of the first and second legs 24, 26 towards the fixed ends 30 provides spring elements having a high spring constant in the X-direction to ensure that the contact points 32 are firmly pressed against the plug contact. To maintain permanent contact, the spring constant of the spring elements or first and second legs 24, 26 is substantially higher than the spring constant of the spring members 60 in the X-direction. Upon action of an external force on the plug contact or on the receptacle contact in the lateral direction (X-direction), no or only a little bending of the spring elements occurs while the more resilient spring members 60 enable a lateral displacement of the whole contact member 20. The plug contact remains firmly contacted by the contact member 20 even in the event of strong displacements or impact loading while the contact member 20 can follow the lateral displacement of the plug contact.

Forces or tensions, which occur upon lateral displacement of the plug contact, are compensated or adsorbed by the spring members 60 so that no or little tilting forces act on the receptacle contact and therefore on the base member 40. The mechanical stress exerted on the joint between the base member 40 and the electrical component is hence reduced, which is particularly important for soldered joints. Therefore, the inventive receptacle connector with its receptacle contact is in particular suitable to be directly soldered to the PCB.

The desired elasticity of the spring members 60 and the spring elements can be adjusted by choosing the right cross-sectional profile and/or by adjusting the length of the respective springs. In particular, the folding structure and the meander-like shape of the spring members 60 substantially increase the overall length of the spring members 60 and hence improve their flexibility.

It will be evident to those skilled in the art that the lateral displacement of the plug contact with respect to the receptacle contact includes both a displacement of the plug connector with respect to a fixed receptacle connector as well as a displacement of the receptacle connector relative to a fixed plug connector. Therefore, a displacement of the plug contact generally refers to any movement of these parts relative to each other.

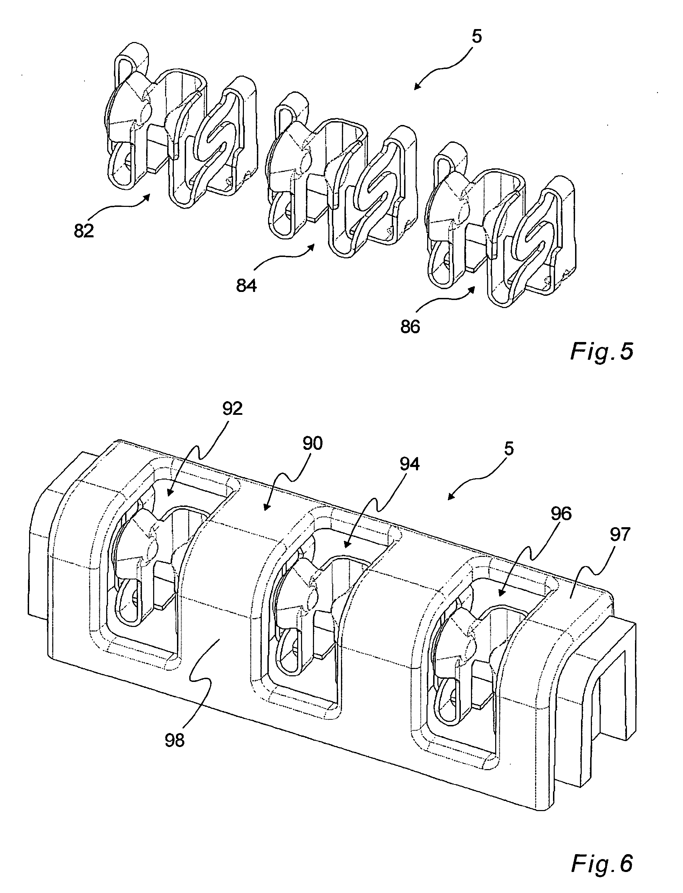

With reference to Figures 5 and 6, an assembled receptacle connector 5 comprising three receptacle contacts 82, 84 and 86 is shown, each of which is formed by a receptacle contact, as shown in Figures 1 to 4. Each of the receptacle contacts 82, 84 and 86 is soldered with its contact surfaces onto a PCB (not shown). A receptacle housing 90 having an upper wall 97 and a front wall 98 covers the receptacle contacts 82, 84, and 86. The receptacle housing 90 further comprises elongated openings 92, 94 and 96, each of which extends parallel to the mating direction on the upper wall 97 and the front wall 98, to provide free access to the contact member of each of the receptacle contacts 82, 84, and 86.

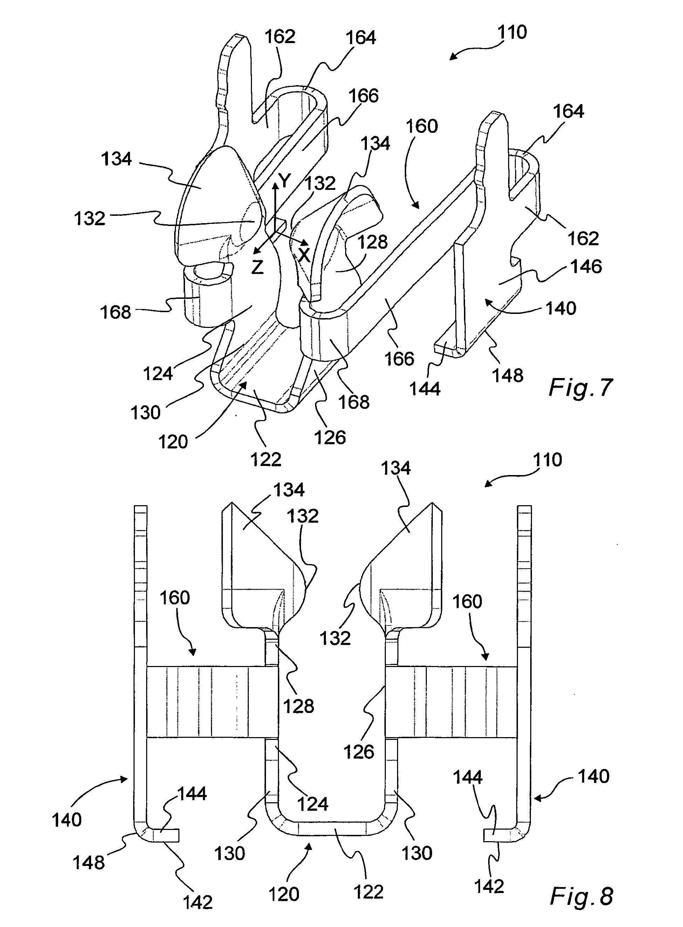

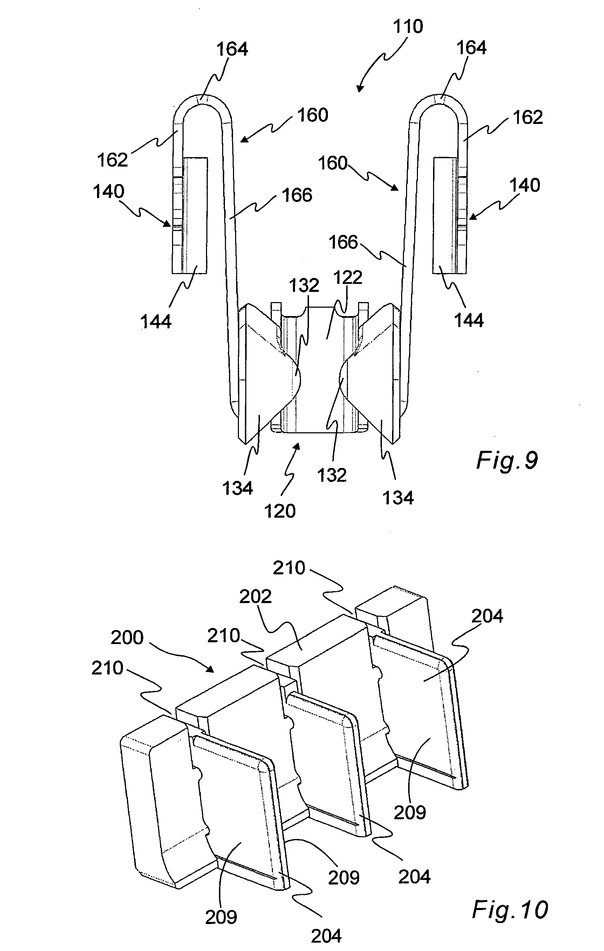

A further embodiment of a receptacle contact 110 is shown in Figures 7 to 9. The receptacle contact 110 comprises a contact member 120, a base member 140 and spring members 160. Again, the receptacle contact 110 has a mirror-symmetrical arrangement with respect to the mating plane YZ. The base member 140 comprises a bottom portion 144 with a contact surface 142 for soldering the receptacle contact 110 and a lateral portion 146, which is upwardly bent along a bending edge 148. Each of the spring members 160, which runs in this embodiment substantially parallel to the contact surface 142 in the Z-direction, is integrally attached to a back edge of base member 140 and comprises a first portion 162 and a second portion 166, which are strip-like in form and arranged in different planes running substantially coplanar with the mating plane YZ. However, a run of the first and second portions 162, 166 inclined with respect to the mating plane YZ is also possible. This is illustrated, for instance, for the second portion 166 in Figure 9 showing a top view of the receptacle contact. The first portion 162 passes into the second portion 166 on a first bending edge 164 that extends perpendicular to the contact surface 142. Each of the spring members 160 is bent along a second bending edge 168 so that the spring members 160 have a S-shaped bending structure. At the second bending edges 168, the spring members 160 are integrally attached to the contact member 120 at a middle portion of first and second legs 124, 126. The contact member 120 is likewise U-shaped in form, as is the contact member 20 of the first embodiment, but extends in a vertical direction perpendicular to the contact surface 142. Again, the cross-sectional profile of the first and second legs 124 and 126 is substantially broader than that of the spring members 160 to obtain a high spring constant. The first and second legs 124, 126 are connected with each other at fixed ends 130 by a connecting portion 122. At free or contact ends 128, each of the first and second leg 124, 126 comprises a contact point 132 partially surrounded by a brim-like guiding means 134. The shape of the guiding means 134 is best illustrated in Figure 8, which shows a front view of the receptacle contact 110. Figure 8 further reveals that the contact points 132 are formed by inwardly directed protuberances at the contact ends 128. This receptacle connector provides substantially the same functionality as the receptacle connector of the first embodiment and therefore reference is made to the corresponding portions of the description to avoid needless repetitions.

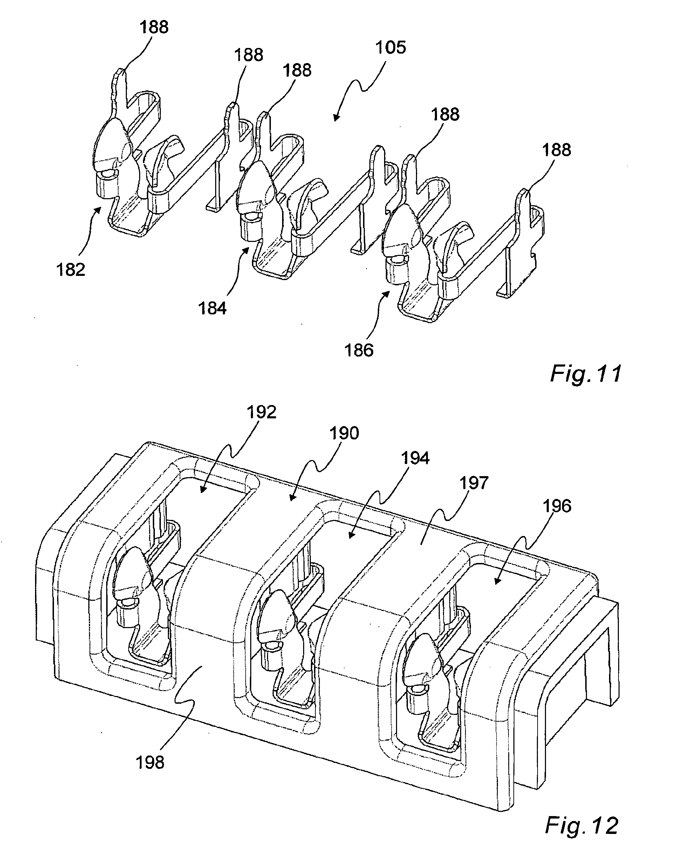

An assembled receptacle connector 105 comprising three receptacle contacts 182, 184 and 186 is shown in Figures 11 and 12. Each of the receptacle contacts 182, 184, and 186 is formed by a receptacle contact 110, as shown in Figures 7 to 9. The assembled receptacle connector 105 also comprises a receptacle housing 190 having an upper wall 197 and a front wall 198 that cover the receptacle contacts 182, 184, and 186. The receptacle housing 190 further comprises elongated openings 192, 194 and 196, each of which extends parallel to the mating direction YZ along the upper and front walls 197, 198 to provide access to the contact members 120 of the receptacle contacts 182, 184, and 186.

For the alignment and fixation of the receptacle contacts 182, 184, and 186 within the receptacle housing 190 each of the receptacle contacts 182, 184, and 186 comprises alignment pins 188 for engaging with corresponding alignment slots (not shown) of the receptacle housing 190.

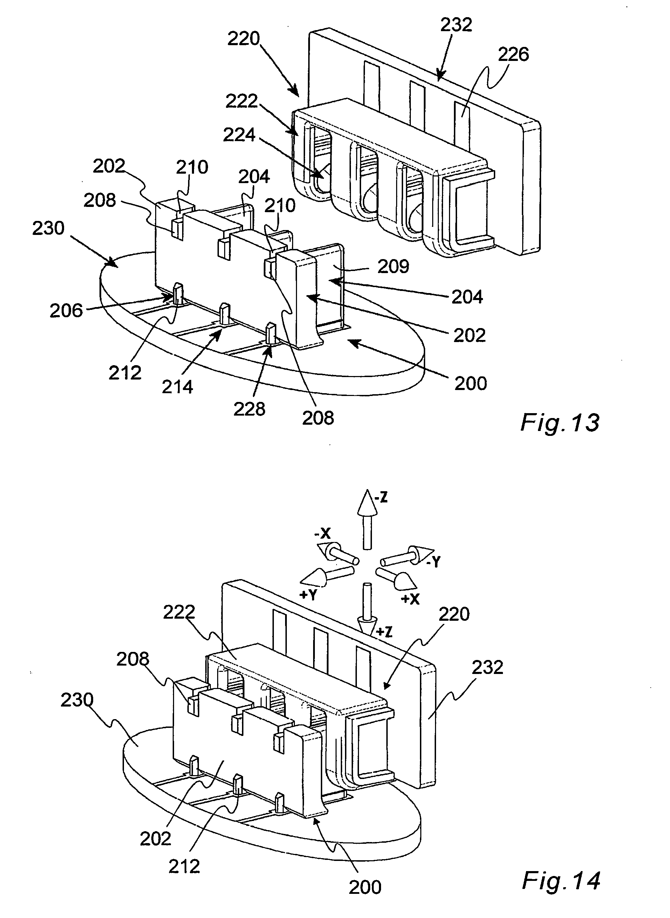

A plug connector 200 corresponding to both the first and the second embodiment is shown in Figures 10, 13 and 14 and comprises a plug housing 202, plug contacts 204 and soldering legs 206, as shown in Figure 13. The plug housing 202, which runs in the lateral direction, supports the plug contacts 204, each of which is plate-like in form and extends coplanar to the mating direction YZ. Each of the plug contacts 204 has a first extension 208 which passes through a slit opening 210 arranged on an upper side of the plug housing 202 for fastening the plug contacts 204. Further slit openings are arranged on the bottom side of the plug housing 202 to accommodate second extensions 212 of the plug contacts 204, which also form the soldering legs 206. For a better fixation of the plug contacts 204 and better electrical contact to soldering pads 214 of a PCB 230, the plug contacts 204 are soldered along their entire bottom narrow side or edge to form solder joints 228. The plug housing 202 is not directly attached to the PCB 230 but stabilizes the plug contacts in the lateral direction. Each of the plug contacts 204 comprises two parallel contact surfaces 209, each of which engages with one of the two contact points upon mating.

Turning to Figures 13 and 14, both the plug connector 200 and a receptacle connector 220 are soldered on respective PCBs 230, 232. Since the receptacle connector 220 shown in Figure 14 is turned 90 degrees around the X axis with respect to Figures 1 and 7, the co-ordinate system shown in Figure 14 is turned accordingly.

Depending on which of the PCBs 230, 232 shown in Figure 14 is part of a mobile device or a removable electronic component, the plug connector 200 or the receptacle connector 220 is inserted into the respective other mating connector. Assuming that the plug connector 200 is soldered to the PCB 230 of a mobile phone and the receptacle connector 220 is soldered to soldering pads 226 of a battery pack, then the battery pack will be inserted into the mobile phone and the receptacle connector 220 is mated with the plug connector 200,, for instance, , in the Z-direction. As is apparent from Figure 14, the receptacle connector 220 can also be mated along the Y axis or a slanted direction or by rotation around the X axis. In the final mating position, the receptacle housing 222 and the plug housing 202 are not in contact with each other. Further, the receptacle housing 222 does not touch the PCB 230. Contact between both of the connectors 200, 220 is only provided by the receptacle contacts 224 and the plug contacts 204. Preferably, the plug contacts 204 do not engage with the connecting portion of the contact member of the receptacle contact so that free movement of the receptacle connector 220 with respect to the plug connector 200 in the YZ-plane is ensured. On the other hand, at maximum insertion depth both of the housings 202, 222 may touch each other.

Misalignment between the connectors 200, 220 upon mating is not critical since the guiding means ensures that the plug contacts will be centered. At the beginning of the mating process, even a small rotational misalignment around the Y and Z axis is not critical. Typical tolerable rotational misalignments around the Y and Z axis are +/- 5o. Around the X axis, both of the connectors 200, 220 can be twisted or misaligned by even 90 degrees at the beginning of the mating process with respect to the final mating position shown in Figure 14.

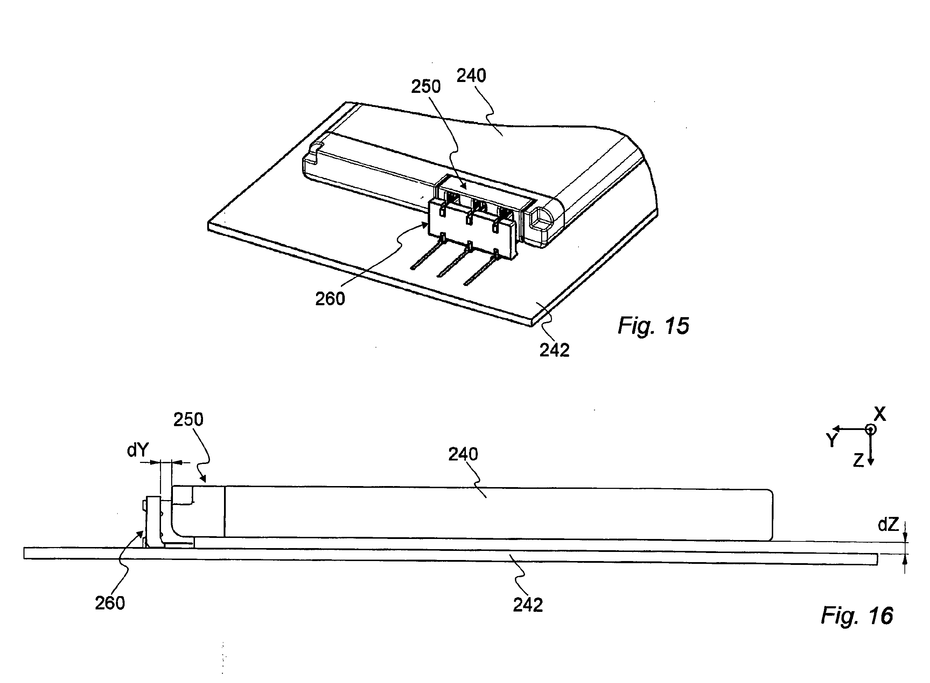

The connection between a battery pack 240 and a PCB 242 of a mobile phone using a connector assembly comprising a receptacle connector 250 and a plug connector 260 is shown more clearly in Figures 15 and 16. The working range dY and dZ of the final mating position in the Y- and Z-direction is indicated and depends on the specific needs of the respective mobile phones. The working range defines the maximum allowable displacement in the respective directions. In the Y- and Z- direction, the contact points of the battery pack 240 simply slide along the contact surfaces of the plug contacts upon displacement while in the X-direction the contact members as a whole are resiliently displaced. Even a rotational displacement is ensured in the final mating position since each of the plug contacts is only contacted point wise by two contact points. Typical working range values in the X-, Y- and Z-direction are less than +/-1 mm and around the X-, Y- and Z-axis are +/- 3 degrees.

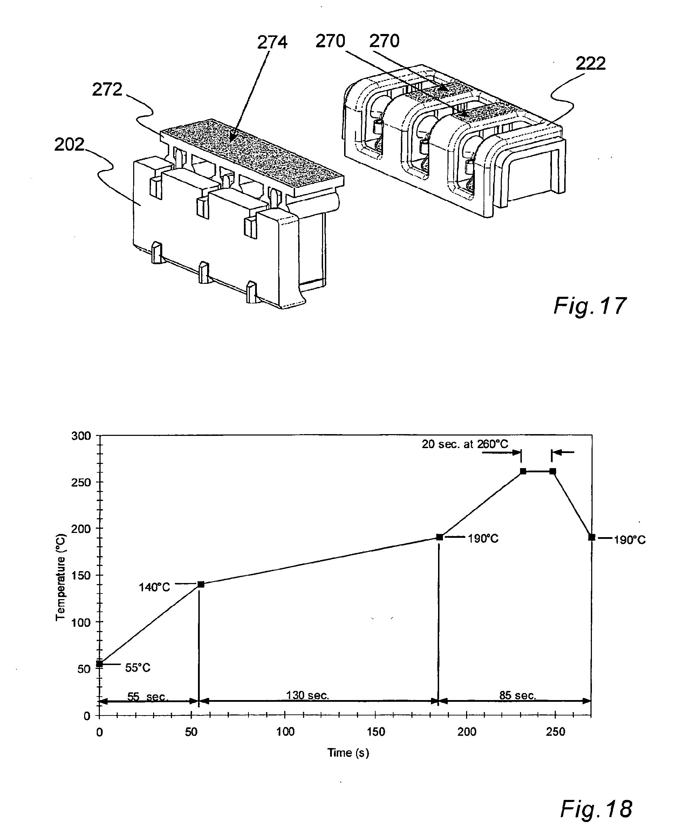

The respective connectors are preferably soldered to their PCBs by robotic pick-and-place. To this end, pick-and place surfaces 270 are provided on the upper wall of receptacle housing 222, as shown in Figure 17. Since the plug housing 202 typically does not provide a surface which is large enough to function as a pick-and-place surface, an auxiliary cap 272 is temporally snap fitted onto the plug contacts that provide such a pick-and-place surface 274. After soldering, the auxiliary cap 272 is removed.

An exemplary temperature profile of a soldering process is shown in Figure 18. Preferably, heat is applied by hot air or infrared illumination.

## Claims

1. Receptacle connector for an electronic component comprising at least one receptacle contact (10), the receptacle contact (10) comprising
at least one contact member (20) for receiving a plug contact (204) of a mating plug connector (200), wherein the plug contact (204) can be inserted into the contact member (20) along a mating direction; the receptacle contact (10) further comprising at least two spring members (60) for enabling a resilient displacement of the contact member (20) in a direction substantially lateral with respect to the mating direction;
wherein:
the contact member (20) comprises at least two opposing contact points (32), between which the plug contact (204) of the mating plug connector (200) is accommodated; the two contact points directly contact the plug contact (204) when it is inserted;
the contact member (20) comprises spring elements (24, 26) for clamping the plug contact (204) when it is inserted, the spring elements being formed by a resilient first leg (24) and a resilient second leg (26), each of the legs (24, 26) having a fixed end (30) and a contact end (28) comprising one of the contact points (32); and
each spring member (60) is attached to one of the two legs (24, 26) of the contact member (20).

2. Receptacle connector according to claim 1, **characterized in that** the contact points (32) are arranged in the lateral direction.

3. Receptacle connector according to any one of the preceding claims, **characterized in that** the contact member (20) is a substantially U-shaped metal strip.

4. Receptacle connector according to any one of the preceding claims, **characterized in that** the contact member (20) comprises guiding means (34) for aligning the plug contact (204) upon insertion into the contact member (20).

5. Receptacle connector according to claim 4, **characterized in that** the guiding means (34) are angled with respect to the mating direction.

6. Receptacle connector according to any preceding claim, **characterized in that** the spring members (60) are attached to the legs (24, 26) at their contact ends (28).

7. Receptacle connector according to any preceding claim, **characterized in that** the spring members are attached to the legs at a portion between the contact ends (28) and the fixed ends (30) of the legs.

8. Receptacle connector according to any one of the preceding claims, **characterized in that** the or each spring member (60) is strip-like in form.

9. Receptacle connector according to any one of the preceding claims, **characterized in that** the or each spring member (60) and the contact member (20) are integrally formed.

10. Receptacle connector according to any one of the preceding claims, **characterized in that** the receptacle contact (10) comprises at least one base member (40) for fastening the receptacle contact (10) to the electronic component.

11. Receptacle connector according to claim 10, **characterized in that** the base member (40) comprises a soldering surface (42) for soldering the receptacle contact (10) to the electronic component.

12. Receptacle connector according to claim 10 or 11, **characterized in that** the at least one spring member (60) enables the resilient displacement of the contact member (20) with respect to the base member (40).

13. Receptacle connector according to any one of the preceding claims, **characterized in that** the electronic component is a battery pack (240) for a mobile electronic device.

14. Receptacle connector according to any one of the preceding claims, **characterized in that** it further comprises a housing (90) having at least one elongated opening (92, 94, 96) aligned with the contact member (20) to enable the plug contact (204) of the mating plug connector (200) to be inserted into the contact member (20).

15. Connector assembly for an electronic component comprising a receptacle connector (5, 105) according to any one of the claims 1 to 14 and a plug connector (200).

16. Connector assembly according to claim 15, **characterized in that** the plug connector (200) comprises at least one plug contact (204) for inserting into the at least one contact member (20, 120) of the receptacle connector, the plug contact (204) having two substantially parallel contact surfaces (209), each of which engages with one of the contact points (32, 132, 224) of the receptacle connector when the plug contact (204) is inserted into the contact member (20, 120).

17. Connector assembly according to claim 15 or 16, **characterized in that** the receptacle connector (5) comprises three receptacle contacts (82, 84, 86) disposed relative to each other in the lateral direction and **in that** the plug connector (200) comprises three plug contacts (204) disposed relative to each other in a corresponding manner.

## Patentansprüche

1. Steckerbuchsenverbinder für eine elektronische Komponente, umfassend mindestens einen Steckerbuchsenkontakt (10), wobei der Steckerbuchsenkontakt (10) folgendes umfaßt:
mindestens ein Kontaktteil (20) zum Aufnehmen eines Steckerkontakts (204) eines Gegensteckverbinders (200), wobei der Steckerkontakt (204) in das Kontaktteil (20) entlang einer Eingriffsrichtung eingefügt werden kann; wobei der Steckerbuchsenkontakt (10) ferner mindestens zwei Federteile (60) zur Ermöglichung einer elastischen Verschiebung des Kontaktteils (20) in einer Richtung im wesentlichen quer in bezug auf die Eingriffsrichtung umfaßt;
wobei:
das Kontaktteil (20) mindestens zwei einander gegenüberliegende Kontaktpunkte (32) umfaßt, zwischen denen der Steckerkontakt (204) des Gegensteckverbinders (200) aufgenommen wird; die beiden Kontaktpunkte direkt mit dem Steckerkontakt (204) in Kontakt kommen, wenn er eingefügt wird;
das Kontaktteil (20) umfaßt: Federelemente (24, 26) zum Festklemmen des Steckerkontakts (204), wenn es eingefügt wird, wobei die Federelemente durch einen elastischen ersten Schenkel (24) und einen elastischen zweiten Schenkel (26) gebildet werden, wobei jeder der Schenkel (24, 26) ein feststehendes Ende (30) und ein Kontaktende (28) hat, das einen der Kontaktpunkte (32) umfaßt; und
jedes Federteil (60) an einem der beiden Schenkel (24, 26) des Kontaktteils (20) angebracht ist.

2. Steckerbuchsenverbinder nach Anspruch 1, **dadurch gekennzeichnet, daß** die Kontaktpunkte (32) in der Querrichtung angeordnet sind.

3. Steckerbuchsenverbinder nach einem der vorhergehenden Ansprüche, **dadurch gekennzeichnet, daß** das Kontaktteil (20) ein im wesentlichen U-förmiger Metallstreifen ist.

4. Steckerbuchsenverbinder nach einem der vorhergehenden Ansprüche, **dadurch gekennzeichnet, daß** das Kontaktteil (20) ein Führungsmittel (34) zum Ausrichten des Steckerkontakts (204) beim Einfügen in das Kontaktteil (20) umfaßt.

5. Steckerbuchsenverbinder nach Anspruch 4, **dadurch gekennzeichnet, daß** das Führungsmittel (34) in bezug auf die Eingriffsrichtung angewinkelt ist.

6. Steckerbuchsenverbinder nach einem der vorhergehenden Ansprüche, **dadurch gekennzeichnet, daß** die Federteile (60) an den Schenkeln (24, 26) an deren Kontaktenden (28) angebracht sind.

7. Steckerbuchsenverbinder nach einem der vorhergehenden Ansprüche, **dadurch gekennzeichnet, daß** die Federteile an den Schenkeln an einem Abschnitt zwischen den Kontaktenden (28) und den feststehenden Enden (30) der Schenkel angebracht sind.

8. Steckerbuchsenverbinder nach einem der vorhergehenden Ansprüche, **dadurch gekennzeichnet, daß** das oder jedes Federteil (60) eine streifenartige Form hat.

9. Steckerbuchsenverbinder nach einem der vorhergehenden Ansprüche, **dadurch gekennzeichnet, daß** das oder jedes Federteil (60) und das Kontaktteil (20) einstückig ausgebildet sind.

10. Steckerbuchsenverbinder nach einem der vorhergehenden Ansprüche, **dadurch gekennzeichnet, daß** der Steckerbuchsenkontakt (10) mindestens ein Basisteil (40) zum Befestigen des Steckerbuchsenkontakts (10) an der elektronischen Komponente umfaßt.

11. Steckerbuchsenverbinder nach Anspruch 10, **dadurch gekennzeichnet, daß** das Basisteil (40) eine Lötoberfläche (42) zum Verlöten des Steckerbuchsenkontakts (10) mit der elektronischen Komponente umfaßt.

12. Steckerbuchsenverbinder nach Anspruch 10 oder 11, **dadurch gekennzeichnet, daß** das mindestens eine Federteil (60) die elastische Verschiebung des Kontaktteils (20) in bezug auf das Basisteil (40) ermöglicht.

13. Steckerbuchsenverbinder nach einem der vorhergehenden Ansprüche, **dadurch gekennzeichnet, daß** die elektronische Komponente ein Batteriesatz (240) für ein mobiles elektronisches Gerät ist.

14. Steckerbuchsenverbinder nach einem der vorhergehenden Ansprüche, **dadurch gekennzeichnet, daß** er ferner ein Gehäuse (90) mit mindestens einer langgestreckten Öffnung (92, 94, 96) umfaßt, die mit dem Kontaktteil (20) ausgerichtet ist, um zu ermöglichen, daß der Steckerkontakt (204) des Gegensteckverbinders (200) in das Kontaktteil (20) eingefügt wird.

15. Verbinderanordnung für eine elektronische Komponente, umfassend einen Steckerbuchsenverbinder (5, 105) nach einem der Ansprüche 1 bis 14 und einen Steckverbinder (200).

16. Verbinderanordnung nach Anspruch 15, **dadurch gekennzeichnet, daß** der Steckverbinder (200) mindestens einen Steckerkontakt (204) zum Einfügen in das mindestens eine Kontaktteil (20, 120) des Steckerbuchsenverbinders umfaßt, wobei der Steckerkontakt (204) zwei im wesentlichen parallele Kontaktoberflächen (209) hat, von denen jede mit einem der Kontaktpunkte (32, 132, 224) des Steckerbuchsenverbinders in Eingriff tritt, wenn der Steckerkontakt (204) in das Kontaktteil (20, 120) eingefügt wird.

17. Verbinderanordnung nach Anspruch 15 oder 16, **dadurch gekennzeichnet, daß** der Steckerbuchsenverbinder (5) drei Buchsenkontakte (82, 84, 86) umfaßt, die zueinander in der Querrichtung angeordnet sind, und daß der Steckverbinder (200) drei Steckerkontakte (204) umfaßt, die zueinander auf eine entsprechende Art und Weise angeordnet sind.

## Revendications

1. Connecteur à embase pour un composant électronique comprenant au moins un contact d'embase (10), le contact d'embase (10) comprenant:
au moins un élément de contact (20) pour recevoir un contact de fiche (204) d'un connecteur de fiche d'engagement (200), dans lequel le contact de fiche (204) peut être inséré à l'intérieur de l'élément de contact (20) suivant une direction d'engagement, le contact d'embase (10) comprenant en outre au moins deux éléments de ressort (60) pour permettre un déplacement élastique de l'élément de contact (20) dans une direction sensiblement latérale par rapport à la direction d'engagement,
dans lequel:
l'élément de contact (20) comprend au moins deux points de contact opposés (32) entre lesquels le contact de fiche (204) du connecteur de fiche d'engagement (200) est logé, les deux points de contact entrant directement en contact avec le contact de fiche (204) lorsqu'il est inséré;
l'élément de contact (20) comprend des éléments de ressort (24, 26) pour verrouiller le contact de fiche (204) lorsqu'il est inséré, les éléments de ressort étant formés par un premier jambage élastique (24) et par un second jambage élastique (26), chacun des jambages (24, 26) comportant une extrémité fixe (30) et une extrémité de contact (28) comprenant l'un des points de contact (32); et
chaque élément de ressort (60) est fixé à l'un des deux jambages (24, 26) de l'élément de contact (20).

2. Connecteur à embase selon la revendication 1, **caractérisé en ce que** les points de contact (32) sont agencés dans la direction latérale.

3. Connecteur à embase selon l'une quelconque des revendications précédentes, **caractérisé en ce que** l'élément de contact (20) est une bande métallique sensiblement en forme de U.

4. Connecteur à embase selon l'une quelconque des revendications précédentes, **caractérisé en ce que** l'élément de contact (20) comprend un moyen de guidage (34) pour aligner le contact de fiche (204) lors de son insertion dans l'élément de contact (20).

5. Connecteur à embase selon la revendication 4, **caractérisé en ce que** le moyen de guidage (34) est angulé par rapport à la direction d'engagement.

6. Connecteur à embase selon l'une quelconque des revendications précédentes, **caractérisé en ce que** les éléments de ressort (60) sont fixés sur les jambages (24, 26) au niveau de leurs extrémités de contact (28).

7. Connecteur à embase selon l'une quelconque des revendications précédentes, **caractérisé en ce que** les éléments de ressort sont fixés aux jambages au niveau d'une partie entre les extrémités de contact (28) et les extrémités fixes (30) des jambages.

8. Connecteur à embase selon l'une quelconque des revendications précédentes, **caractérisé en ce que** le ou chaque élément de ressort (60) est en forme de bande.

9. Connecteur à embase selon l'une quelconque des revendications précédentes, **caractérisé en ce que** le ou chaque élément de ressort (60) et l'élément de contact sont formés d'un seul tenant.

10. Connecteur à embase selon l'une quelconque des revendications précédentes, **caractérisé en ce que** le contact d'embase (10) comprend au moins un élément de base (40) pour fixer le contact d'embase (10) sur le composant électronique.

11. Connecteur à embase selon la revendication 10, **caractérisé en ce que** l'élément de base (40) comprend une surface de soudage (42) pour souder le contact d'embase (10) sur le composant électronique.

12. Connecteur à embase selon la revendication 10 ou 11, **caractérisé en ce que** l'au moins un élément de ressort (60) permet le déplacement élastique de l'élément de contact (20) par rapport à l'élément de base (40).

13. Connecteur à embase selon l'une quelconque des revendications précédentes, **caractérisé en ce que** le composant électronique est un module d'accumulateur (240) pour un dispositif électronique mobile.

14. Connecteur à embase selon l'une quelconque des revendications précédentes, **caractérisé en ce qu'**il comprend en outre un boîtier (90) qui comporte au moins une ouverture allongée (92, 94, 96) alignée avec l'élément de contact (20) pour permettre que le contact de fiche (204) du connecteur de fiche d'engagement (200) soit inséré dans l'élément de contact (20).

15. Assemblage de connecteur pour un composant électronique comprenant un connecteur à embase (5, 105) selon l'une quelconque des revendications 1 à 14 et un connecteur de fiche (200).

16. Assemblage de connecteur selon la revendication 15, **caractérisé en ce que** le connecteur de fiche (200) comprend au moins un contact de fiche (204) pour une insertion dans l'au moins un élément de contact (20, 120) du connecteur à embase, le contact de fiche (204) comportant deux surfaces de contact sensiblement parallèles (209) dont chacune engage l'un des points de contact (32, 132, 224) du connecteur à embase lorsque le contact de fiche (204) est inséré dans l'élément de contact (20, 120).

17. Assemblage de connecteur selon la revendication 15 ou 16, **caractérisé en ce que** le connecteur à embase (5) comprend trois contacts d'embase (82, 84, 86) qui sont disposés les uns par rapport aux autres dans la direction latérale et **en ce que** le contact de fiche (200) comprend trois contacts de fiche (204) qui sont disposés les uns par rapport aux autres d'une manière correspondante.
